**Europäisches Patentamt**

**European Patent Office**

**Office européen des brevets**

(19)

(11) Veröffentlichungsnummer: **0 164 482**

**A1**

(12) **EUROPÄISCHE PATENTANMELDUNG**

(21) Anmeldenummer: **84810285.1**

(22) Anmeldetag: **12.06.84**

(51) Int. Cl.⁴: **B 01 D 25/12**
**B 01 D 29/02**

(43) Veröffentlichungstag der Anmeldung:
**18.12.85 Patentblatt 85/51**

(84) Benannte Vertragsstaaten:
**CH DE FR GB IT LI**

(71) Anmelder: **TENAG AG**
**Rohrstrasse 44**
**CH-8152 Glattbrugg(CH)**

(72) Erfinder: **Hudson, John**
**c/o Tenag AG Rohrstr. 44**
**CH-8152 Glattbrugg(CH)**

(74) Vertreter: **Ryffel, Rolf**
**c/o Hepp Ryffel AG Bahnhofstrasse 58**
**CH-8001 Zürich(CH)**

(54) **Plattenfilter.**

(57) Filterplatten (1) in einem Stapel sind unter Zwischenlage von Filtermedium (2) gegeneinanderpressbar. Jeder Filterkammer zwischen jeweils zwei benachbarten Filterplatten (1) ist an beiden Seiten des Stapels je ein Umlenkorgan (5, 6) für das bahnförmige Filtermedium (2) zugeordnet. Das Filtermedium (2) verläuft von einer Vorratsrolle (11) aus nacheinander jeweils hin und zurück durch mehrere aufeinanderfolgende Filterkammern und dann zu einer Aufwickelrolle (12). Wenn sich in den Filterkammern ein Filterkuchen vorbestimmter Dicke angesammelt hat, werden die Filterplatten (1) voneinander getrennt, und das Filtermedium (2) wird auf dem angegebenen Weg transportiert. Während das Filtermedium (2) über die Umlenkorgane (5) an einer Seite des Stapels läuft, fallen alle Filterkuchen auf der gleichen Seite des Stapels nach unten in einen Aufnahmebehälter (10). Nach dem Transport liegt die Länge Filtermedium, die vorher in einer Filterkammer den Filterkuchen getragen hat, in der gleichen Filterkammer umgedreht unter einer nachgezogenen neuen Länge. Nach einem nächsten Transport liegt die gleiche Länge in einer benachbarten Filterkammer, erneut umgedreht, wieder oben.

Fig. 3

EP 0 164 482 A1

- 1 -

## Plattenfilter
==============

Die Erfindung bezieht sich auf ein Plattenfilter mit wenigstens einer Anordnung von parallelen, unter Zwischenlage von Filtermedium gegeneinanderpressbaren und voneinander trennbaren Filterplatten, von denen je zwei zwischen einander jeweils eine Filterkammer mit einem Einlass und einem Auslass begrenzen, und mit Mitteln zum Liefern von bahnförmigem Filtermedium in jede Filterkammer unter gleichzeitigem Abziehen von gebrauchtem Filtermedium mit Filterkuchen aus der Filterkammer, wobei an einer Seite neben den Platten Umlenkmittel für das Filtermedium angeordnet sind, um das von der Plattenanordnung kommende Filtermedium nach Entfernung des Filterkuchens von demselben zu der Plattenanordnung zurück zu leiten.

Solche Plattenfilter sind bekannt. Die Plattenanordnung hat darin häufig die Form eines Stapels von zahlreichen Filterplatten, z.B. etwa 16 Platten, zwischen denen 15 Filterkammern vorhanden sind. Wenn der Filterkuchen in den Kammern eine gewisse Dicke erreicht hat, werden die Platten voneinander getrennt, worauf das Filtermedium aus den Kammern herausgezogen und neues Filtermedium in die Kammern eingezogen wird. Mit den Umlenkmitteln, die dabei das aus der Plattenanordnung kommende Filtermedium zur Plattenanordnung zurück leiten, wird insbesondere eine Platzersparnis erreicht, indem - im Gegensatz zu anderen bekannten Plattenfiltern - nicht für jede Filterkammer eine eigene Vorratsrolle mit Filtermedium erforderlich ist.

In bekannten Plattenfiltern der angegebenen Art wird das Filtermedium zick-zack-förmig durch mehrere im Plattenstapel jeweils aufeinanderfolgende Filterkammern geführt. Diese Ausbildung ist mit dem Nachteil verbunden, dass die Filterkuchen von Kammer zu Kammer abwechselnd an beiden Seiten des Plattenstapels austreten und abgeführt werden müssen, was die Bedienung kompliziert macht und die Sauberhaltung erschwert. Mindestens an einer Seite des Stapels sind dazu auch noch besondere Einrichtungen erforderlich, um zu verhindern, dass die Filterkuchen auf das am unteren Ende des Zick-Zack-Weges von aussen zugeführte oder nach aussen abgeführte Filtermedium fallen. Ausserdem ist es nicht möglich, laminierte Filtermedien zu verwenden, die auf der Flüssigkeitseintrittsseite eine feinporige Beschichtung tragen, weil bei der zick-zack-förmigen Führung des Filtermediums durch aufeinanderfolgende Filterkammern die Beschichtung in jeder zweiten Kammer auf der Flüssigkeitsaustrittsseite liegen würde.

Die Aufgabe der Erfindung besteht darin, diese Nachteile zu vermeiden.

Sie wird dadurch gelöst, dass die genannten Umlenkmittel für jede Filterkammer der Plattenanordnung je wenigstens ein Umlenkorgan aufweisen, um das aus der Filterkammer kommende Filtermedium in die gleiche Filterkammer zurück zu leiten.

In dieser Weise kann eine gebrauchte Länge Filtermedium aus einer Filterkammer über das zugeordnete Umlenkorgan abgezogen und in die gleiche Filterkammer zurückgeführt werden, so dass diese Länge während eines nächsten Filtriervorganges umgedreht unter dem in die Kammer hinein nachgezogenen Filtermedium liegt. Diese untere Länge nimmt dabei natürlich keinen Filterkuchen auf. Vielmehr wird sie in vorteilhafter Weise rückgespült, so dass sie sich nachher sehr gut zur Wiederverwendung eignet. Nach diesem nächsten Filtriervorgang kann die rückgespülte Länge auf der gegenüberliegenden Seite aus der Filterkammer herausgezogen werden (wobei sie keinen Filterkuchen mitnimmt) und über ein weiters Umlenkorgan in eine benachbarte Filterkammer eingeführt werden, wobei sie erneut umgedreht wird, so dass wieder die gleiche Seite wie am Anfang die Flüssigkeitseintrittsseite ist.

Anhand der Zeichnungen werden nachstehend Ausführungsbeispiele des erfindungsgemässen Plattenfilters beschrieben. In den Zeichnungen zeigen:

Fig. 1 einige Filterplatten eines Plattenfilters im Vertikalschnitt,

Fig. 1A eine Variante zu Fig. 1 und

Fig. 2 bis 6 je ein Schema eines Plattenfilters mit eingezeichnetem Weg des Filtermediums.

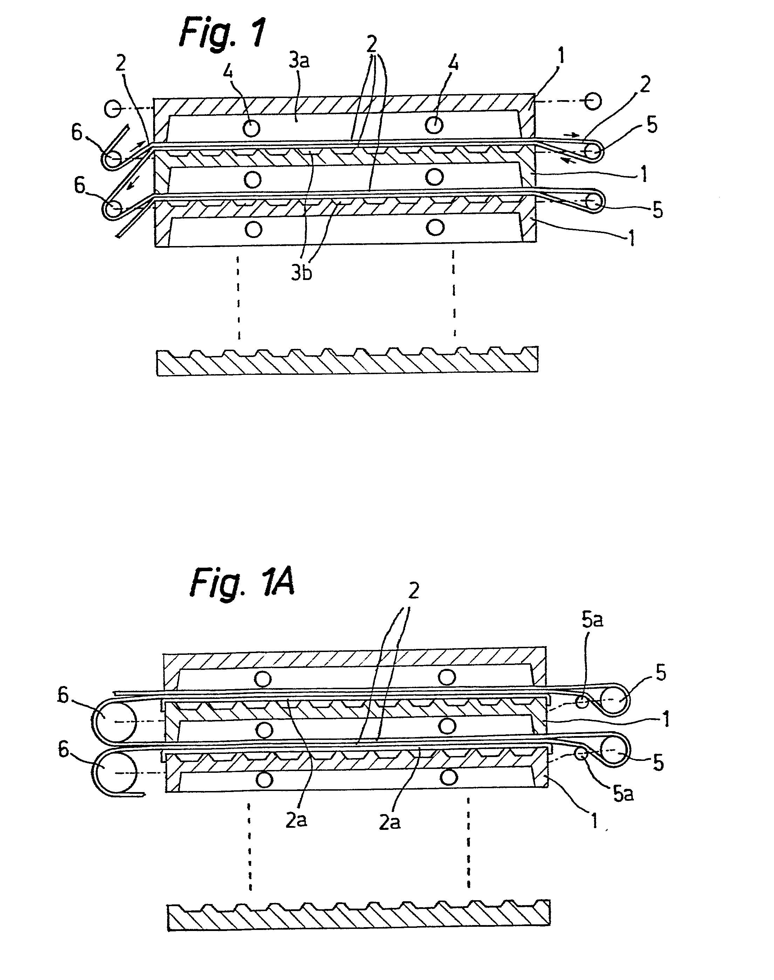

Gemäss Fig. 1 enthält ein Plattenfilter eine Anordnung von parallelen Filterplatten 1, z.B. einen Stapel von etwa 16 Filterplatten 1. Die Platten 1 sind durch nicht dargestellte Mittel in üblicher Weise unter Zwischenlage von Filtermedium 2 dichtend aufeinandergepresst. Zwischen je zwei Platten 1 befindet sich jeweils eine Filterkammer, die von dem Filtermedium 2 in einen Trübe-Raum 3a und einen Filtrat-Raum 3b unterteilt ist. In den Trübe-Raum 3a münden Einlässe 4 für die zu filtrierende Flüssigkeit. Der Filtrat-Raum 3b besitzt nicht dargestellte Auslässe für das Filtrat.

Das bahnförmige Filtermedium 2 (Papier, Vliesstoff o.dgl.) ist um Umlenkorgane 5 herumgelegt, die an einer Seite neben den Platten 1 angeordnet sind. Jeder Filterkammer 3a, 3b ist jeweils ein Umlenkorgan 5 zugeordnet, von dem aus sich das Filtermedium 2 in zwei Lagen durch die Filterkammer erstreckt.

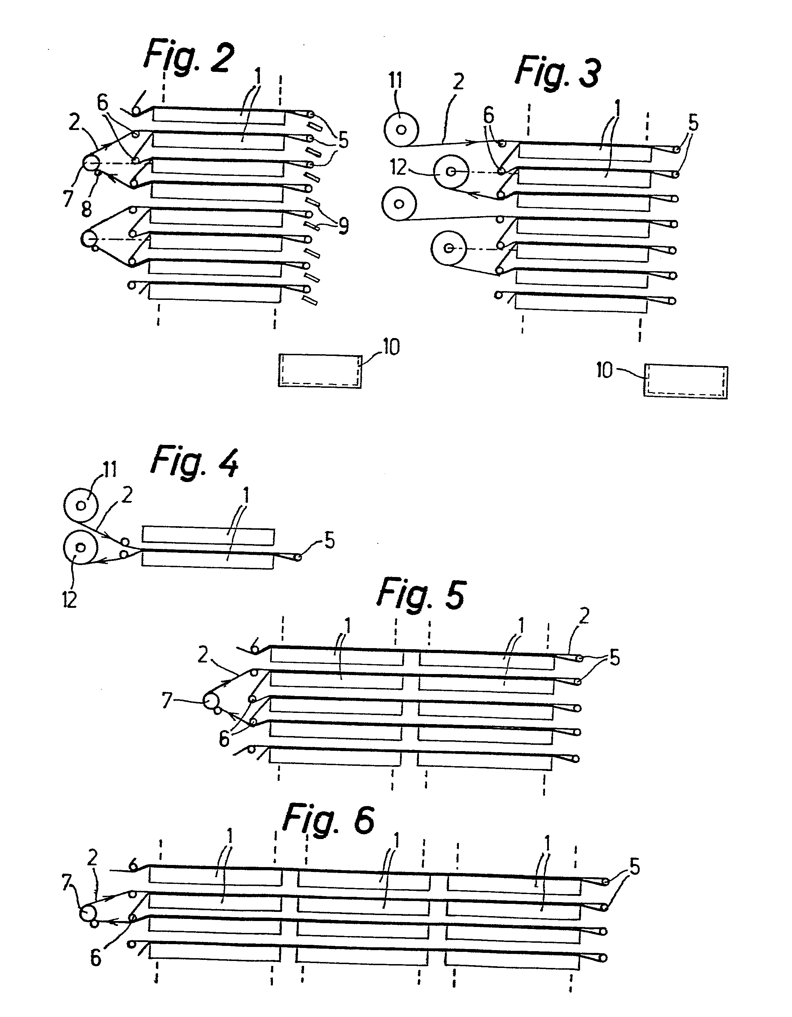

Auf der gegenüberliegenden Seite der Platten 1 sind weitere Umlenkorgane 6 angeordnet, um die herum das bahnförmige Filtermedium 2 jeweils aus einer Filterkammer in eine benachbarte Filterkammer geführt sein kann, wie dargestellt, oder auch zu einer Antriebs- oder Vorrats- oder Aufwickelrolle, wie nachstehend anhand der Fig. 2 bis 6 erläutert.

Bei der Durchführung eines Filtriervorganges bildet sich auf der Länge Filtermedium, welche in einer Filterkammer die dem Trübe-Raum 3a zugewandte Filtermediumlage bildet, ein Filterkuchen. Wenn dieser eine vorbestimme Dicke erreicht hat (bzw. einen Druckabfall vorbestimmter Höhe in der Filterkammer erzeugt), wird er mit der genannten Länge Filtermedium aus der Filterkammer herausbewegt.

Zu dem Zweck werden die Filterplatten 1 in üblicher Weise voneinander getrennt, so dass sie voneinander Abstände haben, beispielsweise 10 - 50 mm, je nach der Dicke des Filterkuchens. Der ganze Plattenstapel wird dabei harmonikaartig auseinandergezogen, bei 15 Filterkammern beispielsweise um insgesamt 150 - 750 mm. Die Umlenkorgane 5 und 6 sind einzeln an den verschiedenen Filterplatten 1 montiert, wie mit strich-punktierten Linien angedeutet. Sie machen daher die Bewegung der Platten mit, so dass praktisch kein zusätzliches Filtermedium nachgezogen werden muss und Streckung oder Beschädigung des Filtermediums vermieden wird.

Danach wird das bahnförmige Filtermedium 2 transportiert, wobei sich die genannte Länge Filtermedium mit dem Filterkuchen zum betreffenden Umlenkorgan 5 bewegt, während gleichzeitig die dem Filtrat-Raum 3b zugewandte Filtermediumlage aus der Filterkammer zum betreffenden Umlenkorgan 6 bewegt wird. Beim Umlaufen des Umlenkorgans 5 löst sich der Filterkuchen vom Filtermedium und fällt nach unten. Die Filterkuchen aus allen Filterkammern können dabei in einem einzigen gemeinsamen Auffangbehälter aufgenommen werden.

Die Umlenkorgane 5 können als feststehende Rohre oder als drehbare Rollen ausgebildet sein. Einem feststehenden Rohr kann Druckluft zugeführt werden, die durch Oeffnungen in der Umfangsfläche austritt und die Reibung zwischen Rohr und Filtermedium verringert. Auch einer drehbaren Rolle kann Druckluft zugeführt werden, die durch Oeffnungen in der Umfangsfläche austritt, um in bekannter Weise eine Zentrierung des Filtermediums auf der Rolle zu bewirken. Eine Zentrierung kann auch durch eine Rolle bewirkt werden, deren Umfangsfläche ballig geformt ist oder sich konisch verjüngende Endabschnitte aufweist. Bei einer solchen Rolle kann es für die Zentrierwirkung vorteilhaft sein, wenn die Rolle angetrieben wird. Eine angetriebene Umlenkrolle kann auch gleichzeitig den Transport des Filtermediums bewirken oder unterstützen; die angetriebene Umlenkrolle kann zu dem Zweck vorzugsweise einen etwas grösseren Durchmesser als in Fig. 1 dargestellt haben und/oder mit einer frei drehbaren Gegenrolle zusammenwirken, etwa wie nachstehend anhand der Fig. 1A erläutert.

Die einem Umlenkorgan allenfalls zugeführte Druckluft kann gleichzeitig auch das Ablösen des Filterkuchens vom Filtermedium erleichtern. Zu dem gleichen Zweck kann man ferner nötigenfalls das Umlenkorgan 5 und/oder das Filtermedium kurz vor dem Umlenkorgan in Vibrationen versetzen. Natürlich kann man nötigenfalls für das Ablösen des Filterkuchens vom Filtermedium auch mechanische Abstreifer bei den Umlenkorganen 5 anordnen.

Die genannte Länge Filtermdium, von der der Filterkuchen entfernt worden ist, läuft dann vom Umlenkorgan 5 umgedreht wieder in die gleiche Filterkammer zurück und bildet dort während eines nächsten Filtriervorganges die dem Filtrat-Raum 3b zugewandte Filtermediumlage, die durch das durchtretende Filtrat eine Rückspülung erfährt.

Gleichzeitig kann die Länge Filtermedium, die während des vorangegangenen Filtriervorganges die dem Filtrat-Raum 3b zugewandte Lage gebildet hat und rückgespült worden ist, vom Umlenkorgan 6 in eine benachbarte Filterkammer laufen, um dann in dieser während des nächsten Filtriervorganges die dem Trübe-Raum 3a zugewandte Filtermediumlage zu bilden. Sie kann aber auch vom Umlenkorgan 6 zu einer Antriebs- und/oder Aufwickelrolle laufen.

In Fig. 1 ist das Filtermedium 2, das vom Umlenkorgan 5 kommt und sich zum Umlenkorgan 6 erstreckt, an den Kanten der Filterplatte 1, auf der es aufliegt, scharf umgelenkt. Bei einem Filtermedium, das auf einer Oberfläche eine feinporige Beschichtung aus relativ weichem Material, wie Polytetrafluoräthylen ("Teflon"), trägt, kann das beim Transport des Filtermediums unter Umständen zu einer übermässigen Abnutzung der Beschichtung führen. Um die scharfe Umlenkung des Filtermediums 2 an den Kanten der Filterplatte 1 zu vermeiden, kann man, wie in Fig. 1A gezeigt, dem Umlenkorgan 5 ein zusätzliches Umlenkorgan 5a zuordnen, z.B. eine frei drehbare Gegenrolle, und das Umlenkorgan 6 etwa auf gleicher Höhe wie die betreffende Filterplatte 1 anordnen. Das Umlenkorgan 6 kann dabei zweckmässig einen Durchmesser haben, der fast so gross ist wie die Höhe der Filterplatte. Auch der Durchmesser des Umlenkorgans 5, das eine antreibbare Rolle sein kann, ist in Fig. 1A grösser als in Fig. 1.

Die Reibung zwischen dem Filtermedium 2 und der darunter liegenden Filterplatte 1 und damit die Abnutzung der Beschichtung des Filtermediums beim Transport kann auch dadurch verringert werden, dass auf der Filterplatte 1 ein Stück 2a aus Filtermedium, mit nach oben gekehrter Beschichtung aus beispielsweise Polytetrafluoräthylen, bleibend angeordnet wird.

In der anhand der Fig. 1 oder 1A beschriebenen Weise kann also das Filtermedium, jeweils zwischen den aufeinanderfolgenden Filtriervorgängen, längs eines Weges bewegt werden, der zweimal, nämlich hin und zurück, durch mindestens eine Filterkammer oder durch einige aufeinanderfolgende Filterkammern verläuft. Verschiedene Formen dieses Weges für verschiedene Filterplattenanordnungen sind in Fig. 2 bis 6 skizziert. Die Plattenanordnungen sind in den Fig. 2 bis 6 in dem Zustand dargestellt, in welchem die Filterplatten 1 voneinander getrennt sind. Für die Durchführung eines Filtriervorganges werden die Filterplatten natürlich aufeinandergepresst. Die Umlenkorgane 5 und 6, die an den einzelnen Filterplatten montiert sind, bewegen sich dabei mit den Platten.

Die Fig. 2 zeigt schematisch eine Anordnung mit einer Vielzahl von übereinander gestapelten Filterplatten 1. Jeweils drei aufeinanderfolgenden Filterkammern ist je eine endlose Filtermediumbahn 2 zugeordnet. (Die Filtermediumbahn 2 könnte natürlich auch einer anderen Anzahl aufeinanderfolgender Filterkammern zugeordnet sein, im allgemeinen einer bis etwa fünf Filterkammern, je nach der Festigkeit und der Belastung des Filtermediums.) Die Bahn 2 verläuft jeweils durch die oberste der drei Filterkammern zum betreffenden Umlenkorgan 5, von diesem durch die gleiche Filterkammer zurück, dann über ein Umlenkorgan 6 in die darunterliegende Filterkammer usw. Aus der untersten der drei Filterkammern verläuft die Bahn 2 über das betreffende Umlenkorgan 6 zu einer drehbaren Antriebsrolle 7, der eine Andrückrolle 8 zugeordnet ist. Die Antriebsrolle 7 und die Andrückrolle 8 sind vorzugsweise, wie wieder mit einer strich-punktierten Linie angedeutet, jeweils ebenfalls an einer der Filterplatten 1 montiert. Um eine einseitige Belastung dieser Filterplatte zu vermeiden, kann ein Antriebsmotor für die Antriebsrolle 7 zweckmässig innerhalb derselben angeordnet sein. Wenn das Filtermedium 2 längs des beschriebenen Weges transportiert wird, löst sich der Filterkuchen bei den Umlenkorganen 5 vom Filtermedium und fällt, gegebenenfalls über ebenfalls an den Filterplatten 1 montierte Leitbleche 9, nach unten in einen Aufnahmebehälter 10. Dieser ist ersichtlicherweise nur an einer Seite der Filterplattenanordnung erforderlich, da die Filterkuchen aus allen Filterkammern der Anordnung auf der gleichen Seite der Anordnung austreten. Man könnte den Aufnahmebehälter 10 gewünschtenfalls sogar noch für eine zweite, gleichartige, spiegelbildlich aufgestellte Filterplattenanordnung mitverwenden.

Fig. 3 zeigt eine gleiche Anordnung von Filterplatten 1 wie Fig. 2.Auch der Weg der Filtermediumbahn 2 durch jeweils drei (oder eine bis etwa fünf)
übereinanderliegende Filterkammern ist gleich wie in
Fig. 2. Jedoch ist in Fig. 3 die Filtermediumbahn 2
nicht endlos, sondern sie wird von einer Vorratsrolle
11 kommend zugeführt und auf eine von einem Motor antreibbare Aufwickelrolle 12 abgezogen. In dieser Weise wird eine gegebene Länge Filtermedium (entsprechend der Breite der Filterkammern) dreimal zum Filtrieren verwendet, nämlich einmal in jeder der drei
übereinanderliegenden Filterkammern, bevor sie schliesslich auf der Aufwickelrolle 12 aufgewickelt wird. Viele Filtermedien eignen sich jedoch, insbesondere auch
dank der Rückspülung in der gleichen Filterkammer während des jeweils nachfolgenden Filtriervorganges, für
wesentlich mehr als drei wiederholte Verwendungen, bevor sie unbrauchbar werden. Daher kann man, nachdem
praktisch die ganze Filtermediumbahn 2 auf der Aufwickelrolle 12 aufgewickelt worden ist, die Filtermediumbahn von der Aufwickelrolle 12 auf die Vorratsrolle 11 zurückspulen und erneut in gleicher Weise
verwenden. Die Vorratsrolle 11 und/oder die Aufwickelrolle 12 können, wenn sie nicht allzu gross sind, an
Filterplatten 1 montiert werden. Man kann sie aber gewünschtenfalls auch in einem auf dem Fussboden stehenden Gestell anordnen.

Die Fig. 4 zeigt eine Filterplattenanordnung
mit nur zwei Filterplatten 1, d.h. mit nur einer einzigen Filterkammer. Die Filtermediumbahn 2 verläuft
von einer Vorratsrolle 11 kommend durch die Filterkammer hindurch zum Umlenkorgan 5 und von diesem wieder durch die Filterkammer hindurch zurück zu einer
motorisch antreibbaren Aufwickelrolle 12. Die Filtermediumbahn wird auch hier jeweils zwischen Filtriervorgängen absatzweise transportiert. Die in einem
Filtriervorgang gebrauchte Filtermediumlänge wird
während des nächsten Filtriervorganges in der gleichen Filterkammer rückgespült. Nachdem praktisch die ganze Filtermediumbahn auf der Aufwickelrolle 12 aufgewickelt worden ist, kann man sie auf die Vorratsrolle 11 zurückspulen.

Man kann auch mehrere Filterplattenanordnungen der in Fig. 2 oder 3 dargestellten Art nebeneinander aufstellen und das bahnförmige Filtermedium nacheinander durch die Plattenanordnungen hindurchführen, z.B. wie in Fig. 5 und 6 gezeigt.

Gemäss Fig. 5 sind nebeneinander zwei Stapel von Filterplatten 1 aufgestellt. An einer Seite neben den Filterplatten 1 des rechten Stapels sind die Umlenkorgane 5 angeordnet, welche das aus jeder Filterkammer dieses Stapels kommende Filtermedium 2 jeweils in die gleiche Filterkammer zurückführen. An der gegenüberliegenden Seite des linken Stapels sind die Umlenkorgane 6 angeordnet, welche das aus einer Filterkammer kommende Filtermedium jeweils in eine benachbarte Filterkammer oder, wie in Fig. 2, zu oder von einer drehbaren Antriebsrolle 7 leiten. Die Filtermediumbahn 2 ist hier wieder endlos ausgebildet und verläuft von der Antriebsrolle 7 ausgehend durch je drei einander benachbarte Filterkammern in jedem Plattenstapel hin und zurück, bevor sie wieder zur Antriebsrolle 7 zurückkehrt.

In Fig. 6 verläuft eine ebenfalls endlose Filtermediumbahn 2 in ähnlicher Weise durch je zwei einander benachbarte Filterkammern in jeder von drei nebeneinander aufgestellten Filterplattenanordnungen. (Die Filtermediumbahn könnte natürlich auch, wie in Fig. 4, jeweils durch nur eine Filterkammer in jeder der drei Plattenanordnungen verlaufen.)

Da in den beschriebenen Filterplattenanordnungen, z.B. gemäss Fig. 2 oder 3, die Filterkuchen aus allen Filterkammern nur an einer Seite der Plattenanordnung austreten, ergibt sich die in manchen Fällen vorteilhafte Möglichkeit, die Plattenanordnungen mit vertikal stehenden Filterplatten 1, die Umlenkorgane 5 unten liegend, zu betreiben. Wenn die Filterplatten voneinander getrennt werden, fallen die Filterkuchen aus allen Filterkammern, während das Filtermedium in der beschriebenen Weise transportiert wird, unten aus der Plattenanordnung heraus und können abgeführt werden. Dabei ist es in manchen Fällen nicht einmal nötig, vor dem Trennen der Filterplatten die Filterkammern zu entleeren, d.h. die Flüssigkeit aus ihnen z.B. mit Druckluft herauszudrücken; die Flüssigkeit kann beim Trennen der Filterplatten ebenfalls unten aus der Plattenanordnung herausfallen. Zusätzlich kann man gewünschtenfalls in den Filterkammern Flüssigkeitsdüsen anordnen und damit, während die Filterplatten voneinander getrennt sind, das Filtermedium in den Kammern waschen.

Für die Herstellung der in gewissen Ausführungsformen verwendeten endlosen Filtermediumbahn müssen zwei Enden einer Filtermediumbahn miteinander verbunden werden. Ebenso ist es für das Einziehen einer neuen Filtermediumbahn durch alle Filterkammern einer Plattenanordnung oft wünschbar, das Ende der neuen Filtermediumbahn mit dem in Transportrichtung hinteren Ende der zu ersetzenden Filtermediumbahn zu verbinden. Dieses Verbinden der Enden einer Filtermediumbahn oder von zwei Filtermediumbahnen erfolgt vorzugsweise so, dass die Bahn, zwischen den Rändern von zwei Filterplatten gepresst, auch an der Verbindungsstelle die betreffende Filterkammer am Umfang abdichten kann. Wenn das nicht möglich ist, können eventuell zusätzliche gummielastische Dichtungselemente an den Rändern der Filterplatten angeordnet werden oder kann die Filtermediumbahn so verwendet werden, dass die Verbindungsstelle während der Filtriervorgänge jeweils ausserhalb der Filterkammern liegt.

Patentansprüche
=================

1. Plattenfilter, mit wenigstens einer Anordnung von parallelen, unter Zwischenlage von Filtermedium (2) gegeneinanderpressbaren und voneinander trennbaren Platten (1), von denen je zwei zwischen einander jeweils eine Filterkammer (3a, 3b) mit einem Einlass und einem Auslass begrenzen, und mit Mitteln (7; 11) zum Liefern von bahnförmigem Filtermedium (2) in jede Filterkammer unter gleichzeitigem Abziehen von gebrauchtem Filtermedium mit Filterkuchen aus der Filterkammer, wobei an einer Seite neben den Platten (1) Umlenkmittel (5) für das Filtermedium (2) angeordnet sind, um das von der Plattenanordnung kommende Filtermedium nach Entfernung des Filterkuchens von demselben zu der Plattenanordnung zurück zu leiten, dadurch gekennzeichnet, dass die genannten Umlenkmittel für jede Filterkammer (3a, 3b) der Plattenanordnung je wenigstens ein Umlenkorgan (5) aufweisen, um das aus der Filterkammer kommende Filtermedium (2) in die gleiche Filterkammer zurück zu leiten.

2. Plattenfilter nach Anspruch 1, dadurch gekennzeichnet, dass die Umlenkorgane (5) wenigstens zum Teil drehbar gelagerte und antreibbare Rollen sind.

3. Plattenfilter nach Anspruch 1 oder 2, dadurch gekennzeichnet, dass an der der genannten einen Seite gegenüberliegenden Seite der Plattenanordnung oder einer Reihe von Plattenanordnungen neben den Platten (1) weitere Umlenkorgane (6) angeordnet sind, um das aus einer Filterkammer (3a, 3b) kommende Filtermedium (2) jeweils in eine benachbarte Filterkammer zu leiten, so dass das Filtermedium nacheinander durch mehrere Filterkammern in der Plattenanordnung bzw. in jeder Plattenanordnung der Reihe verläuft.

4. Plattenfilter nach einem der Ansprüche 1 bis 3, dadurch gekennzeichnet, dass die Umlenkorgane (5) z.B. Stäbe, Rohre oder drehbare Rollen, individuell an den einzelnen Platten (1) montiert sind.

5. Plattenfilter nach einem der Ansprüche 1 bis 4, dadurch gekennzeichnet, dass an der der genannten einen Seite gegenüberliegenden Seite der Plattenanordnung oder einer Reihe von Plattenanordnungen neben den Platten (1) wenigstens eine Antriebseinrichtung (7, 8) für eine endlos ausgebildete Filtermediumbahn (2) angeordnet ist, z.B. eine drehbare Antriebsrolle (7) mit zugeordneter Andrückrolle (8).

6. Plattenfilter nach Anspruch 5, dadurch gekennzeichnet, dass die Antriebseinrichtung (7, 8) an einer der Platten (1) montiert ist.

7. Plattenfilter nach Anspruch 6, dadurch gekennzeichnet, dass die Antriebseinrichtung (7, 8) eine drehbare Antriebsrolle (7) und einen innerhalb derselben angeordneten Antriebsmotor aufweist.

8. Plattenfilter nach einem der Ansprüche 1 bis 4, dadurch gekennzeichnet, dass an der der genannten einen Seite gegenüberliegenden Seite der Plattenanordnung oder einer Reihe von Plattenanordnungen neben den Platten (1) wenigstens eine Vorratsrolle (11) zum Abgeben von Filtermedium (2) in eine der Filterkammern und wenigstens eine antreibbare Aufwickelrolle (12) zum Aufwickeln von aus einer der Filterkammern abgezogenem Filtermedium angeordnet sind.

9. Plattenfilter nach Anspruch 8, dadurch gekennzeichnet, dass die Vorratsrolle (11) und/oder die Aufwickelrolle (12) jeweils an einer der Platten (1) montiert sind.

10. Plattenfilter nach einem der Ansprüche 1 bis 9, dadurch gekennzeichnet, dass die Platten (1) etwa vertikal angeordnet sind, wobei die genannte eine Seite unten liegt.

11. Verfahren zum Betrieb des Plattenfilters nach einem der Ansprüche 1 bis 10, dadurch gekennzeichnet, dass man nach Durchführung eines Filtriervorganges in einer Filterkammer, wenn sich auf einer in der Kammer befindlichen Länge eines bahnförmigen Filtermediums ein Filterkuchen angesammelt hat, die die Kammer begrenzenden Platten voneinander trennt, die Länge Filtermedium mit dem Filterkuchen über das der Kammer zugeordnete Umlenkorgan an der genannten einen Seite aus der Kammer herauszieht, wobei ausserhalb der Kammer der Filterkuchen vom Filtermedium entfernt wird und wobei eine neue Länge Filtermedium in die Filterkammer hinein nachgezogen wird und die erstgenannte Länge nach der Entfernung des Filterkuchens über das Umlenkorgan ebenfalls wieder in die gleiche Kammer eingeführt wird, und danach die Platten wieder gegeneinander presst und einen nächsten Filtriervorgang durchführt.

12. Verfahren nach Anspruch 11, dadurch gekennzeichnet, dass nach der Durchführung des nächsten Filtriervorganges die erstgenannte Länge Filtermedium, die auf der der genannten einen Seite gegenüberliegenden Seite aus der Filterkammer herausgezogen wird, als neue Länge in eine benachbarte Filterkammer eingeführt wird.

13. Verfahren nach Anspruch 11 oder 12, dadurch gekennzeichnet, dass das Filtermedium, nachdem es eine Reihe von Filterkammern durchlaufen hat, erneut in gleicher Weise verwendet wird.

14. Verfahren nach Anspruch 13, dadurch gekennzeichnet, dass eine endlose Filtermediumbahn verwendet wird.

15. Verfahren nach Anspruch 13, dadurch gekennzeichnet, dass die Filtermediumbahn der ersten Filterkammer der Reihe von einer Vorratsrolle zugeführt wird, nach Durchlaufen der Reihe auf einer Aufwickelrolle aufgewickelt wird und für die erneute Verwendung von der Aufwickelrolle auf die Vorratsrolle zurückgespult wird.

Fig. 1

Fig. 1A

Fig. 2

Fig. 3

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 219 164 (PREPARATION INDUSTRIELLE DES COMBUSTIBLES) <br> * Seiten 1-3 * | 1-3,11 ,13,14 | B 01 D 25/12 <br> B 01 D 29/02 |
| A |  | 5,7 |  |
|  | --- |  |  |
| X | DE-A-2 024 797 (MESCHENGISSER) <br> * Seite 4, Zeilen 24,25 * | 1,4 |  |
| A | * Seiten 5-10 * | 11 |  |
|  | --- |  |  |
| X | US-A-3 767 052 (KATSUTAMI SHIBASAKI) <br><br> * Spalte 2, Zeilen 46-68 * | 1,2,4, 10-12, 14 |  |
|  |  |  | RECHERCHIERTE SACHGEBIETE (Int. Cl.4) |
| A | * Spalten 3-6 * | 5,6,13 | B 01 D <br> B 30 B <br> C 12 H |
|  | --- |  | C 12 G |
| A | DE-B-1 124 924 (GENE MIRS) <br> * Spalten 1-8 * | 8,9,15 |  |
|  | ----- |  |  |

Der vorliegende Recherchenbericht wurde für alle Patentansprüche erstellt.

| Recherchenort <br> DEN HAAG | Abschlußdatum der Recherche <br> 23-11-1984 | Prüfer <br> DE PAEPE P.F.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82